(19) Europäisches Patentamt
European Patent Office
Office européen des brevets

(11) **EP 1 087 625 B1**

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(51) Int Cl.:
*H04N 7/36* (2006.01)    *H04N 7/50* (2006.01)
*H04N 7/26* (2006.01)

(21) Anmeldenummer: **00118575.0**

(22) Anmeldetag: **26.08.2000**

(54) **Digitales Transcodiersystem**

Digital transcoder system

Système numérique de transcodage

(84) Benannte Vertragsstaaten:
**AT BE CH CY DE DK ES FI FR GB GR IE IT LI LU MC NL PT SE**

(30) Priorität: **27.09.1999 DE 19946267**

(43) Veröffentlichungstag der Anmeldung:
**28.03.2001 Patentblatt 2001/13**

(73) Patentinhaber: **XSYS Interactive Research GmbH**
**78050 Villingen-Schwenningen (DE)**

(72) Erfinder:
 • **Sostawa, Bernd**
  **71083 Herrenberg (DE)**
 • **Dannemann, Thomas**
  **70806 Kornwestheim (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
EP-A- 0 627 858    EP-A- 0 711 079
US-A- 5 657 015    US-A- 5 754 235

 • KEESMAN G ET AL: "TRANSCODING OF MPEG BITSTREAMS" SIGNAL PROCESSING. IMAGE COMMUNICATION, ELSEVIER SCIENCE PUBLISHERS, AMSTERDAM, NL, Bd. 8, Nr. 6, September 1996 (1996-09), Seiten 481-500, XP000596654 ISSN: 0923-5965
 • WILKINSON J: "UNDERSTANDING MPEG CONCATENATION AND TRANSCODING" ABU TECHNICAL REVIEW, ASIAN BROADCASTING UNION, KUALA LUMPUR, MW, Nr. 177, Juli 1998 (1998-07), Seiten 3-9, XP000992282 ISSN: 0126-6209

EP 1 087 625 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein digitales Transcodiersystem zum Empfang von Datenbitströmen einer ersten Bitrate und Ausgeben eines Datenbitstromes einer im Vergleich zur ersten Bitrate unterschiedlichen und insbesondere reduzierten, zweiten Bitrate gemäß den Merkmalen des Oberbegriffs des Anspruchs 1.

Digitale Transcodiersysteme sind überall dort notwendig, wo Datenbitströme in ihrer Bitrate umkonvertiert werden, um beispielsweise über einen bandbreitenbegrenzten Übertragungskanal geschickt zu werden. Beispiele zur Transcodierung sind u.a. beschrieben in US 5,754,235, WO 97/49206 und DE 196 23 934 A1. Weitere Veröffentlichungen hierzu befinden sich in IEEE Transactions on Consumer Electronics, Vol. 44, No.1, February 1998, Seite 88 bis 98 in dem Artikel Transcoder Architectures For Video Coding" und in IEEE International Conference On Imaging processing, Vol. 3, 1995, Seite 408 bis 411, in dem Artikel "Rate conversion Of MPEG Coded Video By RE-Quantization Process".

Ein Hauptanwendungsgebiet der digitalen Transcodierung liegt in der Verarbeitung von Videobitströmen. So sind z.B. auf einem DVD-Video Videobitströme (DVD: Digital Video Disc oder Digital Versatile Disc) nach dem MPEG-2-Videocodier-standard gespeichert. Die Bitströme besitzen eine Bitrate von z.B. bis zu 9,8 Mbit/s, wobei die Bitrate zeitlich konstant oder variabel sein kann. Für die Verteilung in bestimmten Übertragungskanälen, wie z.B. einem optischen Bus in Automobilen, ist diese maximale Bitrate jedoch zu hoch, da die Bussysteme nur eine begrenzte und meist konstante Bitrate zur Verfügung stellen. Die Anpassung der DVD-Technologie für die Anwendung im Automobil gelingt deshalb nur mit einem digitalen Transcodierer, der sowohl die mittlere Bitrate als auch die Bitratencharakteristik der Videobitströme verändert.

Auf der DVD-Video ist üblicherweise ein MPEG-2-Programmstrom gespeichert, der z.B. einen Videobitstrom, mehrere Audiobitströme, Untertitel- und Navigationsinformation enthält. Der Videobitstrom ist üblicherweise nach den Videocodierstandards MPEG-1 oder MPEG-2 datenreduziert und codiert. Da meist der Videocodierstandard MPEG-2 verwendet wird, zeigt die Tabelle 1 einige Eigenschaften des MPEG-2-Videobitstroms auf der DVD-Video.

**Tabelle 1**: DVD-Video. Einige Eigenschaften des MPEG-2-Videobitstroms.

| | |
|---|---|
| Videocodierstandard | MPEG-2, Untermenge von Main Profile @ Main Level |
| | MPEG-2, Untermenge von Simple Profile @ Main Level |
| Maximale Bitrate | 9,8 Mbit/s |
| Bitratencharakteristik | Variable Bitrate (VBR), Konstante Bitrate (CBR) |
| Unterstützte Fernsehsysteme | PAL (625/50), NTSC (525/60) |
| Auflosung in Bildpunkten | PAL: 720 x 576, 352 x 288 |
| | NTSC: 720 x 480, 352 x 240 |
| Bildwiederholfrequenz | PAL: 25 Vollbilder/s |
| | NTSC: 29,97 Vollbilder/s |
| Maximale Bildgruppen-Länge (Group of pictures, GOP) | PAL: 15 Vollbilder |
| | NTSC: 18 Vollbilder |

Die Notwendigkeit der Anpassung der DVD-Technologie für den Einsatz im Automobil wird deutlich, wenn man die Eigenschaften des optischen Buses betrachtet, über den der Videobitstrom im Automobil verteilt wird. Für die Übertragung des Videobitstroms stellt der optische Bus nur eine Bitrate von 3 bis 4 Mbit/s bereit. Die bereitgestellte Bitrate ist zeitlich konstant, d. h., daß in jedem Zeitintervall gleicher Dauer die gleiche Datenmenge transportiert wird. Diese beiden Eigenschaften des Buses führen zu Anforderungen an den zu übertragenden Videobitstrom. Der Videobitstrom darf somit nur eine Bitrate von 3 bis 4 Mbit/s besitzen und die Bitrate muß zeitlich konstant sein. Vergleicht man die Anforderungen mit den Einträgen in der Tabelle 1, wird deutlich, daß der Videobitstrom auf der DVD-Video diese nicht erfüllt. Die mittlere und maximale Bitrate auf der DVD-Video sind zu hoch, da die Videobitströme eine Bitrate von bis zu 9,8 Mbit/s aufweisen dürfen. Darüber hinaus dürfen die Videobitströme auf der DVD-Video, neben einer konstanten (CBR) auch eine variable (VBR) Bitrate besitzen. Bitströme mit variabler Bitrate besitzen eine zeitlich stark schwankende Bitrate und können i. a. nicht mit einer konstanten Bitrate übertragen werden. Die Videobitströme auf der DVD-Video müssen daher in bezug auf das Bitratenniveau und die Bitratencharakteristik an die Eigenschaften des optischen Buses im Automobil angepaßt werden. Die Anpassung wird durch einen digitalen Transcodierer geleistet.

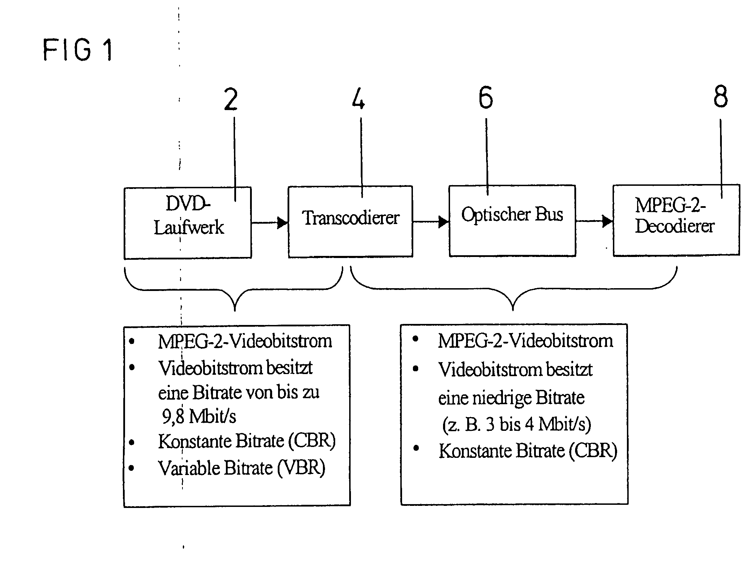

Fig.1 zeigt beispielhaft die resultierende Konfiguration für die Verteilung von Videobitströmen über einen optischen Bus im Automobil. Der digitale Transcodierer bildet, wie ersichtlich, die Schnittstelle zwischen zwei Bereichen mit unterschiedlichen Eigenschaften. Die Entwicklung eines Konversionsalgorithmus für den Transcodierer und die Implementierung des Algorithmus in einem Video-Prozessor-Plattform ist deshalb ziel unterschiedlicher Entwicklungsarbeiten.

Zwei Anforderungen an den Transcodierer wurden bereits im vorhergehenden Abschnitt formuliert und können aus Fig. 1 abgelesen werden. Der digitale Transcodierer muß die Bitrate des zugeführten Videobitstroms reduzieren und gegebenenfalls dessen Bitratencharakteristik verändern, so daß am Ausgang des Transcodierers ein CBR-Bitstrom mit einer definierten Bitrate anliegt.

Die erste Forderung besagt, daß Verfahren gefunden werden müssen, um die Datenmenge des zugeführten Videobitstroms nachträglich zu verringern. Die zweite Forderung wird durch eine Bitratenregelung erfüllt, die die oben gefundenen Verfahren so einsetzt, daß der transcodierte Videobitstrom die gewünschte konstante Bitrate besitzt.

Neben den oben genannten Anforderungen an die Funktionen des Transcodierers, existieren noch Anforderungen an die Art und Weise, wie diese Funktionen realisiert werden sollen. Die zusätzlichen Anforderungen an die Realisierung der Funktionen ergeben sich durch die beabsichtigte Verwirklichung mit einem Video-Prozessor. Um die Verwirklichung zu vereinfachen, soll der Transcodierungsalgorithmus nicht nur eine geringe Komplexität, sondern auch geringe Speicheranforderungen besitzen. Die durch die Bitratenregelung verursachte Verzögerungszeit soll so gering wie möglich sein, um die Laufzeit der Bitströme durch das System in Fig. 1 nicht allzu hoch werden zu lassen.

Schließlich muß natürlich die Bildqualität des transcodierten Videobitstroms berücksichtigt werden, denn davon hängt maßgeblich die Akzeptanz des Systems ab. Die Bildqualität soll unter Erfüllung der oben genannten Anforderungen so gut wie möglich sein. Gesucht ist ein Transcodierungsalgorithmus, der einen sinnvollen Kompromiß aus möglichst guter Bildqualität, möglichst geringem Aufwand und möglichst geringer Verzögerungszeit darstellt.

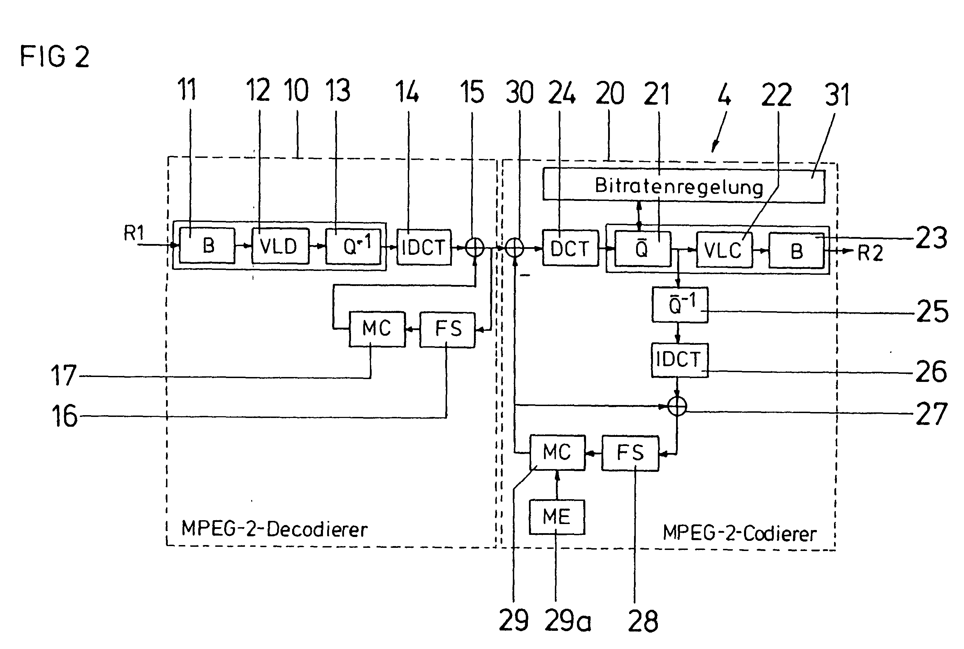

Eine bekannte Ausführungsform eines digitalen Transcodierers ist in dem eingangs genannten Artikel "Transcoder Architectures for Video Coding" auf Seite 3 in Zusammenhang mit dem dort dargestellten Blockschaltbild erläutert. Das Blockschaltbild ist vorliegend sinngemäß in Fig. 2 wiedergegeben. Der bekannte Transcodierer 4 besteht aus der Kettenschaltung eines vollständigen MPEG-2-Videodecodierers 10 und eines kompletten MPEG-2-Videocodierers 20. Der MPEG-2-Videodecodierer 10 weist die Reihenschaltung eines Eingangspuffers 11, eines VLC-Decodierers 12 (VLC: Code variabler Länge), eines Dequantisierers 13, einer Inverse-DCT-Stufe 14 (DCT: Diskrete Cosinus-Transformation) und einer nachfolgenden Additionseinheit 15 auf. Das Ausgangssignal der Additionsstufe 15 wird dem einen Eingang eines Addierers 30 des MPEG-2-Videocodierers 20 zugeführt und zugleich an einen Bildspeicher 16 mit nachgeschalteter Bewegungskompensationsstufe 17 einem zweiten Eingang der Additionsstufe 15 gelegt.

Der MPEG-2-Videocodierer 20 weist die Reihenschaltung einer DCT-Stufe 24, einem nachfolgenden Quantisierer 21 mit nachgeschalteten VLC-Codierer 22 und Ausgangspuffer 23 auf. Der Ausgang des Quantisiers 21 ist mit dem Eingang eines Dequantisierers 25 in Verbindung, an dessen Ausgang eine weitere IDCT-Stufe 26 angeschlossen ist. Deren Ausgang ist mit dem Eingang einer Addierstufe 27 in Verbindung. Der Ausgang der Addierstufe 27 ist über einen Bildspeicher 28 mit nachgeschalteter Bewegungskompensationsstufe 29 auf einen zweiten Eingang der Addierstufe rückgekoppelt sowie an einen zweiten Eingang des Addierers 30 geführt. Zusätzlich ist an die Bewegungskompensationsstufe 29 eine Bewegungsschätzungsstufe 29a gekoppelt.

Der zugeführte Videobitstrom wird mit einem solchen bekannten digitalen Transcodierer vollständig decodiert und anschließend vollständig neu codiert. Eine Bitratenregelungstufe 31 des MPEG-2-Codierers 20 stellt dabei den Quantisierer 21 so ein, daß die gewünschte niedrige konstante Zielbitrate erreicht wird.

Ein solcher Transcodierer erfüllt zwar die oben genannten Anforderungen an die Funktionen des gewünschten Transcodierers, jedoch ist der Implementierungsaufwand zu hoch. Durch die mehrmalige Berechnung der DCT und IDCT, die Bewegungskompensation und vor allem die Bewegungsschätzung ist die Komplexität viel zu hoch, um mit vernünftigen Aufwand in Hardwarerealisierung zu ermöglichen. Die Speicheranforderungen sind ebenfalls groß, da für die Durchführung der Bewegungskompensation jeweils zwei Bilder gespeichert werden müssen.

Eine Ursache für die große Komplexität des allgemeinen Transcodierers liegt in der fehlenden Kommunikation zwischen dem Decodierer und dem Codierer. Der Codierer kann auf die im Decodierer vorliegenden Codierungsparameter des Eingangsbitstroms nicht zugreifen und muß alle Codrerungsparameter neu entscheiden. Insbesondere führt der Codierer eine erneute Bewegungsschätzung durch.

Die Komplexität und der Aufwand des allgemeinen Transcodierers lassen sich reduzieren, wenn nicht alle Codierungsparameter neu entschieden und die entsprechenden Parameter des Eingangsbitstroms genutzt werden. Je nach Anzahl und Wahl der aus dem Eingangsbitstrom übernommenen Codierungsparameter ergeben sich vereinfachte Transcodierer.

Ein bekannter vereinfachter digitaler Transcodierer ohne die in Fig. 2 dargestellte und oben beschriebene Rückkopplung besteht lediglich aus den grau unterlegten Blöcken in Fig.2 und ist z.B. aus Bild 2 von Seite 411 der eingangs genannten Veröffentlichung "Rate Conversion Of MPEG Coded Video By Re-Quantization Process" bekannt. Eine adaptive Requantisierung und Bitratenregelung ist dadurch vorgesehen, daß der neue Requantisierungsfaktor als Produkt aus Basisquantisierungsfaktoren und dem Quotienten aus Eingangsquantisiserungsfaktoren Und mittleren Eingangsquantisierungsfaktoren bestimmt wird.

Dies ist problematisch, weil die Quantisierungsfaktoren mit den entsprechend, hohen Datenmengen in Beziehung gesetzt werden müssen.

Der vorliegenden Erfindung liegt die Aufgabe zugrunde, den eingangs genannten digitalen, nicht rückgekoppelten Transcodierer so zu verbessern, daß dieser in einer sehr einfachen Weise, ohne viel Speicherplatz bei der Implementierung zu benötigen, realisierbar ist.

Diese Aufgabe wird durch einen digitalen Transcodierer mit den Merkmalen des Anspruchs 1 gelöst.

Weiterbildungen sind Gegenstand der Unteransprüche.

Verwendungen eines solchen, erfindungsgemäßen Transcodierers sind Gegenstand der Ansprüche 11 bis 14.

Die Erfindung wird anhand eines Ausführungsbeispieles im Zusammenhang mit Figuren weiter näher erläutert. Es zeigen:

Fig.1    das bereits erläuterte Blockschaltbild für die Vertei- lung von Videobitströmen über einen optischen Bus in einem Automobil.

Fig.2    das bereits erläuterte Blockschaltbild eines bekannten digitalen Transcodierers,

Fig.3    ein Blockschaltbild eines erfindungsgemäßen, digitalen Transcodierers,

Fig.4    eine detailliertere Darstellung der Schaltungskompo- nenten des Blockschaltbildes von Fig. 3,

Fig.5    ein Diagramm, aus dem die Quantisierungsfaktoren QS im Eingangsbitstrom und im transcodierten Bitstrom bei einem konkreten Ausführungsbeipiel des digitalen Transcodierers von Fig. 3 bzw. Fig. 4 hervorgehen,

Fig.6    ein Diagramm, aus dem die Datenmenge D pro Bild im Eingangsbitstrom und transcodierten Bitstrom bei dem angegebenen, konkreten Ausführungsbeispiel hervorgeht,

Fig.7    ein Diagramm für das "Peak Signal-to-Noise-Ratio" (PSNR) bei dem mit dem erfindungsgemäßen Transcodierer erzeugten Bild als Maß für die Bildqualität,

Fig.8    ein Blockschaltbild einer Datenaufzeichnungseinrich- tung, die den erfindungsgemäßen Transcodierer enthält,

Fig.9    ein Blockschaltbild zur Realisierung einer Stufe eines Transcodierers, mit der der Dequantiserungs- und Quantisierungsvorgang in einem Schritt durchführbar ist, und

Fig.10   ein Blockschaltbild mit verschiedenen Schaltungsböcken zur Berechnung von neuen Requantisierungsfaktoren $qS_{neu}$.

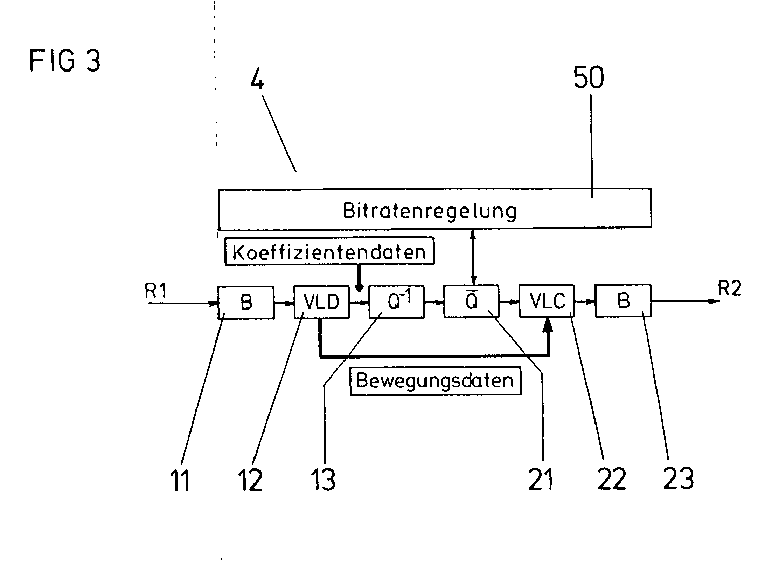

Das Blockschaltbild eines digitalen Trancodierers ohne Rückkopplung gemäß der Erfindung zeigt Figur 3. Eingangsseitig wird dem Transcodierer 4 ein erster Datenstrom R1 in einen Eingangspuffer 11 zugeführt. Dieser Eingangspuffer 11 dient zur Zwischenspeicherung eines Ausschnittes des Datenbitstroms R1. Ausgangsseitig ist der Eingangspuffer 11 mit einem VLD-Decodierer und Demultiplexer 12 in Verbindung, welcher ausgangsseitig wiederum an den Eingang eines Dequantisierers 13 gelegt ist. Der Ausgang des Dequantisierers 13 ist direkt mit dem Eingang_eines nachgeordneten Quantisierers 21 in Verbindung, dessen Ausgang an einen VLC-Codierer gelegt ist. Ausgangsseitig ist der digitale Transcodierer 4 noch mit einem Ausgangspuffer 23 versehen. Am Ausgang des Ausgangspuffers 23 ist ein zweiter Datenbitstrom R2 abgreifbar, der beispielsweise im Vergleich zum eingangsseitigen Datenbitstrom R1 in seine Bitrate reduziert und konstant ist, während der empfangene Bitstrom R1 auch variabel in seiner Bitrate sein kann.

Wie Figur 3 weiter zeigt, werden Bewegungsdaten in dem VLC-Decodierer und Demultiplexer 12 direkt und unverändert an den VLC-Codierer 22 gegeben. Der Quantisierer 21 ist mit einer Bitratenregelungsstufe 50 in Verbindung, die erfindungsgemäß dafür sorgt, dass der ausgangsseitige Datenbitstrom R2 in seiner Bitrate konstant ist und eine vorgegebene Zielbitrate aufweist.

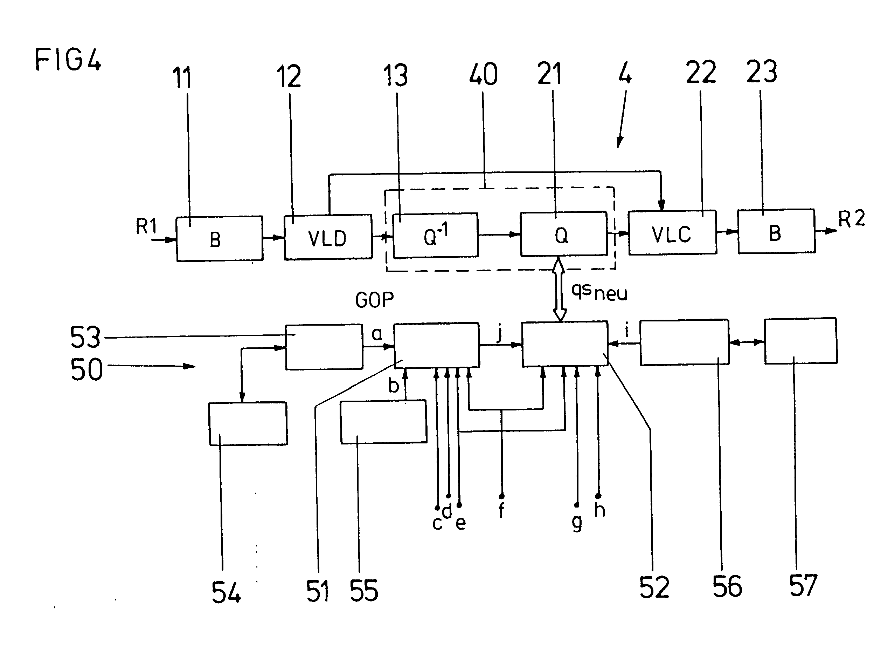

Bevor das in Figur 4 dargestellte, detailliertere Blockschaltbild eines Ausführungsbeispieles des digitalen Transcodierers nach der Erfindung erläutert wird, wird zunächst die Funktionsweise des rückkopplungsfreien Transcodierers gemäß Figur 3 vorgestellt.

Der Umfang der Koeffizientendaten hängt von der gewählten Quantisierung ab. Eine grobe Quantisierung mit einem großen Quantisierungsfaktor verkleinert die Datenmenge der Koeffizienten, da viele Koeffizienten zu Null quantisiert werden, d. h. wegfallen, und die verbleibenden Koeffizienten betragsmäßig klein werden. Wenige kleine Koeffizienten können in der VLC-Einheit effizient codiert werden und verursachen eine kleine Datenmenge.

Der hochratige Eingangsbitstrom R1 enthält fein quantisierte Koeffizienten. Die fein quantisierten Koeffizienten werden im Reguantisierungsprozeß gröber quantisiert. Dadurch sinken die Datenmenge der Koeffizienten und die Bitrate des transcodierten Bitstroms. Wenn der Requantisierungsfaktor hinreichend groß gewählt wird, verschwinden alle Koeffizienten. Dieser Sonderfall wird im Transcodierungsvorgang erkannt und entsprechend dem MPEG-2-Standard in an sich bekannter Art und Weise behandelt.

Die Bitratenregelung im Transcodierer 4 sorgt dafür, daß der transcodierte Bitstrom die gewünschten Anforderungen an die mittlere und maximale Bitrate und die Bitratencharakteristik erfüllt. Der Requantisierungsfaktor ist hierfür das einzige Instrument der Regelung. Jede Bitratenregelung in einem Transcodierer besitzt eine Verzögerungszeit. Diese Eigenschaft soll anhand eines allgemeinen Modells einer Bitratenregelung erläutert werden. Die Bitratenregelung liest zunächst einen Ausschnitt des Eingangsbitstroms ein, um ihn zu analysieren. Dabei werden z. B. die Datenmenge der Koeffizienten pro Bild und die Quantisierungsfaktoren im Eingangsbitstrom ausgewertet. Erst nach der Analyse, also mit einer Verzögerungszeit, die dem gespeicherten Ausschnitt des Eingangsbitstroms entspricht, werden die gespeicherten Koeffizientendaten requantisiert. Da die Regelung im Transcoderier eine geringe Verzögerungszeit besitzen soll, darf nur ein kleiner Ausschnitt des Eingangsbitstroms zur Analyse zwischengespeichert werden. Um die Verzögerungszeit zu minimieren, verzichtet die Regelung im Transcodiere völlig auf eine Speicherung und Analyse des Eingangsbitstroms. Sie arbeitet daher auf Makroblock-Basis. Ein Makroblock ist ein Datenbereich im MPEG-2-Videobitstrom, der sowohl die Koeffizientenals auch die Bewegungsdaten eines nur 16 x 16 Bildpunkte großen Bildausschnittes enthält. Ein Makroblock wird aus dem Eingangsbitstrom eingelesen, ohne Verzögerung requantisiert und in den transcodierten Ausgangsbitstrom geschrieben.

Da die Bitratenregelung keine Voranalyse des Eingangsbitstroms durchführt, orientiert sie sich bei der Bestimmung des Requantisierungsftoren an der Datenmenge des bereits transcodierten Bitstroms und den zuletzt verwendeten Requantisierungsfaktoren. Für einige Einstellungsparameter der Regelung, die durch die fehlende Voranalyse nicht bekannt sind, müssen sinnvolle Schätzungen gebildet werden, die zweckmäßigerweise auf empirischen und statistischen Erhebungen beruhen.

Eine wesentliche Aufgabe der Bitratenregelung besteht darin, einen Eingangsbitstrom variabler Bitrate (VBR-Bitstrom) in einen transcodierten Bitstrom konstanter Bitrate (CBR-Bitstrom) umzuwandeln. Die Videobitströme auf der DVD-Video sind in der Regel VBR-Bitströme. VBR-Bitströme unterscheiden sich in einigen Punkten deutlich von CBR-Bitströmen. Wie der Name schon ausdrückt, besitzen VBR-Bitströme eine variable Bitrate über der Zeit. D. h., die für die Übertragung eines VBR-Bitstroms benötigte Bandbreite schwankt mit der Zeit. Dagegen benötigt ein CBR-Bitstrom zu allen Zeiten die gleiche Bandbreite, da die Bitrate über der Zeit konstant ist. Die Bitratencharakteristik spiegelt sich in der Datenmenge pro Bild wider. Ein VBR-Bitstrom besitzt eine sehr stark schwankende Datenmenge pro Bild. Einfache Bilder mit wenig Aktivität, z. B. Schwarzbilder, erzeugen eine sehr kleine Datenmenge, während komplizierte Bilder mit großer Aktivität, z. B. Sportaufnahmen mit schneller Bewegung, eine sehr große Datenmenge enthalten. In einem VBR-Bitstrom bekommt jedes Bild die Datenmenge zugeteilt, die eine sehr gute Bildqualität ermöglicht. Daher ist die Bildqualität von VBR-Bitströmen in der Regel konstant über der Zeit und ständig auf einem hohen Niveau. Ein CBR-Bitstrom ist der Einschränkung unterworfen, daß er zu jedem Zeitpunkt die gleiche Bitrate besitzen muß. Die Datenmenge pro Bild darf nur in dem Rahmen schwanken, so daß gerade noch eine konstante Bitrate eingehalten wird. Die Konsequenz ist, daß einfache Bilder mit relativ großer Datenmenge und komplizierte Bilder mit relativ kleiner Datenmenge codiert werden müssen. Die Bitratenregelung im erfindungsgemäßen Transcodierer 4 berücksichtigt die oben genannten Eigenschaften des VBR-Eingangsbitstroms und erzeugt einen transcodierten Bitstrom, der den CBR-Eigenschaften genügt.

In Figur 4 ist ein im Vergleich zum Blockschaltbild von Figur 3 detaillierteres Schaltbild gezeigt. Die Bitratenregelungsstufe 50 besteht aus einer Reihe von Schaltungsblöcken 51 bis 57, denen noch zu erläuternde Signale bzw. Einstellparameter a) bis j) zugeführt werden, um den Requantisierungsfaktor in der Quantisierungsstufe 21 so zu regeln, dass der ausgangsseitige Datenbitstrom R2 eine vorher bestimmte, konstante Zielbitrate aufweist.

Die Bitratenregelungsstufe 50 weist eine Bit-Allocation-Stufe 51 zur Ermittlung der Zieldatenmenge für ein Bild auf. Diese Stufe 51 ist mit einer Schätzungsstufe 53 in Verbindung. Die Schätzungsstufe 53 stellt der Bit-Allocations-Stufe 51 geschätzte Einstellparameter a für Bildgruppen (=GOP) zur Verfügung. Die Schätzwerte können beispielsweise die GOP-Länge und/oder GOP-Struktur beinhalten. Eine Überprüfungseinheit 54 ist an die Schätzstelle 53 gekoppelt und überprüft die Schätzungen anhand der Informationen im empfangenen Datenbitstrom R1. Ein weiteres Signal b wird der Bit-Allocations-Stufe 51 durch eine Schnitterkennungsstufe 55 bereitgestellt. In dieser Schnitterkennungsstufe 55 werden Bild- bzw. Szenenschnitte detektiert. Als weitere Signale erhält die Bit-Allocations-Stufe 51 eine Information über die Anzahl von Bits, die bei der Transcodierung des letzten Bildes erzeugt wurden (=Signal c) und eine Information über den Mittelwert der Requantisierungsfaktoren des letzten Bildes (=Signal d). Schließlich werden der Bit-Allocations-Stufe 51 noch Informationen über die Zielbitrate (=Signal e) und die Bildwiederholfrequenz (=Signal f) zugeführt.

Aus den Signalen a bis f erzeugt die Bit-Allocations-Stufe 51 ein Signal j für die Zieldatenmenge eines Bildes und führt dieses einer sogenannten Rate-Control-Stufe 52 zu. Diese Rate-Control-Stufe 52 steht direkt mit dem Quantisierer 21 des Transcodierers 4 in Verbindung und stellt dem Quantisierer 21 des Transcodierers 4 die Requantisierungsfaktoren für jeden Makroblock im Bild zur Verfügung. Hierfür wird der Rate-Control-Stufe 52 neben der Zieldatenmenge j zusätzlich eine Information über die Bildwiederholfrequenz und Zielbitrate (Signale e und f) zur Verfügung gestellt. Darüber hinaus erhält die Rate-Control-Stufe 52 ein Informationssignal g über die Anzahl der Makroblöcke pro Bild (Signal g) sowie ein Informationssignal über die Anzahl von Bits, die bei der Trancodierung der einzelnen Markorblöcke erzeugt wurden (Signal h). Schließlich erhält die Rate-Control-Stufe 52 noch eine Signal i aus einer Überwachungseinheit 56, die mit einem VBV-Speicher 57 in Verbindung steht. Das Signal i zeigt an, dass der VBV-Speicher (VBV: Video-Buffering-Verifier) 57 weder über- noch leergelaufen ist. Der Bit-Allocations-Stufe 51 werden Schätzwerte für die GOP-Länge und den Aufbau einer Bildgruppe (GOP-Struktur) zur verfügung gestellt. Dies ist nötig, damit die Bit-Allocations-Stufe 51 einen sinnvollen Wert für die Zieldatenmenge eines Bildes berechnen kann.

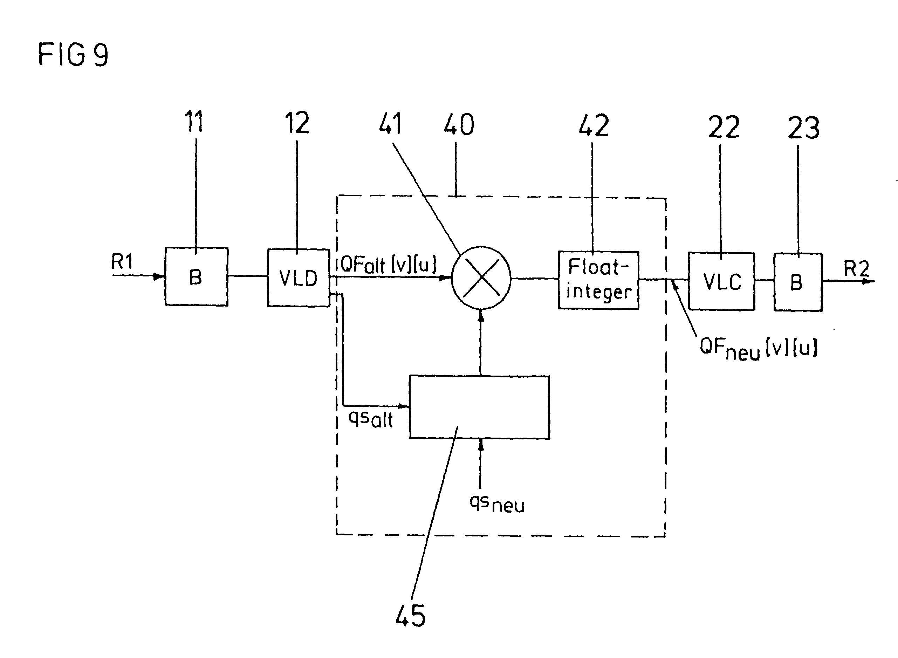

Wie in dem Blockschaltbild von Figur 4 bereits strichliert angedeutet, kann der Dequantisierer 13 und Quantisierer 21 durch eine gemeinsame Stufe 40 ersetzt sein. Ein Beispiel für eine solche gemeinsame Stufe 40 ist in Figur 9 dargestellt Die gemeinsame Stufe 40 verfügt über einen Multiplizierer 41, dem aus dem VLD-Decodierer und Demultiplexer 12 die Koeffizientendaten $QF_{alt}$ und das Divisionsergebnis aus der Division der alten Requantisierungsfaktoren $qs_{alt}$ zu den neuen Requantisierungsfaktoren $qs_{neu}$ zugeführt wird. Die Division von $qs_{alt}$ zu $qs_{neu}$ erfolgt in einem Dividierer 45. Die neuen Requantisierungsfaktoren $qs_{neu}$ werden, wie im Zusammenhang mit Figur 4 erläutert über die Bitregelungsstufe 50 oder manuell, zur Verfügung gestellt. Der alte Requantisierungsfaktor $qs_{alt}$ wird direkt aus dem VLD-Decodierer und Demultiplexer 12 dem Dividierer 45 zugeleitet. Der Ausgang des Multiplizierers 41 ist mit einer Float-Integer-Umwandlungsstufe 42 in Verbindung, an deren Ausgang die neuen Koeffizientendaten $QF_{neu}$ bereitstehen und dem Eingang des VLC-Codierers 22 zugeleitet werden.

Mit dieser Schaltungsanordnung werden also die Quantisierungs- und Requantisierungsfaktoren nicht unabhängig voneinander in zwei Schritten bestimmt, sondern zusammen in einem Schritt. Die Quantisierung der DCT-Koeffizienten, also Koeffizientendaten, wird durch die Quantisierungsmatrix und den Quantisierungsfaktor qs bestimmt. Die Quantisierungsmatrix enthält für jeden der 64 DCT-Koeffizienten eines Blockes einen Wert. Der Quantisierungsfaktor qs ist konstant für alle Blöcke und damit auch für alle Koeffizienten eines Makroblocks. Ein Kennzeichen des erfindungsgemäßen Requantisierungsprozesses ist, dass die Quantisierungsmatrix nicht verändert wird. Der transkodierte Bitstrom enthält dieselben Quantisierungsmatrizen wie der Eingangsbitstrom R1. Da die Quantisierungsmatrizen unverändert bleiben, enthält die Requantisierungsformel gemäß

$$QF_{neu}[v][u] = QF_{alt}[v][u] \ \frac{qs_{alt}}{qs_{neu}}.$$

keine Elemente der Quantisierungsmatrizen. Da der Quotient $qs_{alt}/qs_{neu}$ für alle DCT-Koeffizienten eines Makroblocks konstant ist, muß er konsequenterweise nur einmal pro Makroblock berechnet werden und auch nur dann, wenn sich $qs_{alt}$ oder $qs_{neu}$ im Vergleich zum vorhergehenden Makroblock verändert haben. Die neuen Koeffizientendaten $QS_{neu}$ wird durch bloße Multiplikation mit dem Qutienten aus $qs_{alt}/qs_{neu}$ mit den alten Koeffizientendaten $QF_{alt}$ berechnet. Die Multiplikation muß vorteilhaferweise nur dann ausgeführt werden, wenn $QF_{alt}$ ungleich Null ist.

Die oben genannte Requatisierungsformel zeigt ihren vollen Nutzen dann, wenn der Aufwand an Rechenoperationen minimiert werden soll, wie dies bei Hardware-Realisierungen der Fall ist. Die oben genannte Requantisierungsformel verursacht nur höchstens eine Division pro Makroblock und höchstens eine Multiplikation pro DCT-Koeffizient.

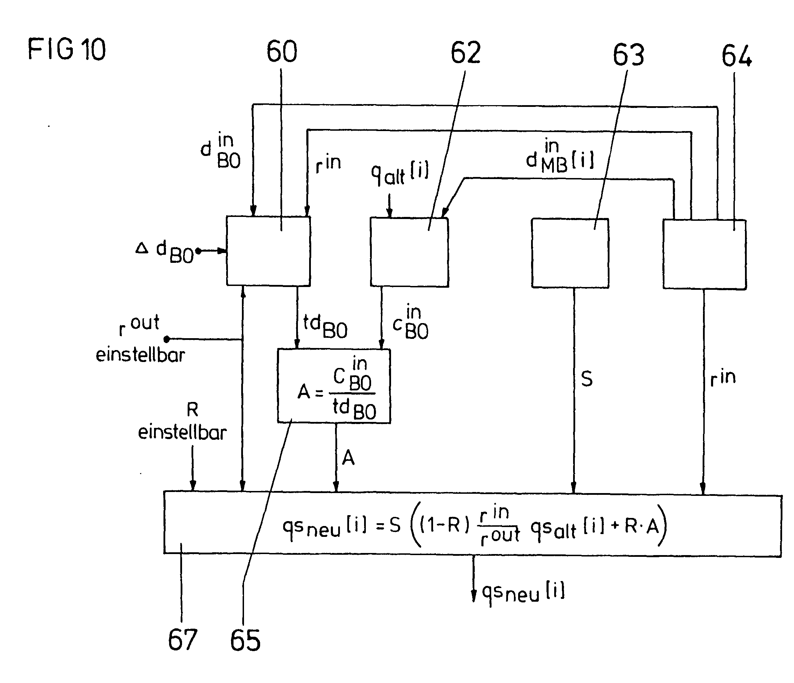

In Fig. 10 ist das Blockschaltbild für eine Schaltungsanordnung zur Berechnung der neuen Requantisierungsfaktoren qsneu dargestellt. Diese Art der Berechnung kann in jedem Transcodierer eingesetzt werden (also auch in den vorbekannten Transcodierern gemäß Fig. 2 und 3) und ist damit unabhängig von der schaltungsanordnung zur Bestimmung der DCT-Koeffizienten. Es ist jedoch bevorzugt, daß das Blockschaltbild von Fig. 10 in Kombination mit der Anordnung von Fig. 9 eingesetzt wird.

Das Blockschaltbild von Fig. 10 besteht aus verschiedenen Rechenstufen 60 bis 67, denen jeweils unterschiedliche Berechnungsparameter zugeführt werden. Um die Art und Weise der Berechnung zu verstehen, wird zunächst der theoretische Hintergrund für die Realisierung erläutert.

Die Bitratenregelung für einen Transcodierer beruht auf dem Komplexitätsmaß, kurz "Komplexität" genannt. Zwischen folgenden Komplexitäten ist zu unterscheiden:

Komplexität eines Makroblocks im zu transcodierenden Bitstrom

$$C_{MB}^{in}[i] = d_{MB}^{in}[i] \cdot qs_{MB}^{in}[i]$$

Komplexität eines Slices (Makroblockgruppe) im zu transcodierenden Bitstrom

$$C_{Slice}^{in} = \sum_{\substack{alleMBi \\ imSlice}} C_{MB}^{in}[i]$$

(fortgesetzt)

Komplexität eines Bildes im zu transcodierenden Bitstrom

$$C_{Bild}^{in} = \sum_{\substack{alleMBi \\ imBild}} C_{MB}^{in}[i]$$

Komplexität einer Group of pictures (GOP, Bildgruppe) im zu transcodierenden Bitstrom

$$C_{GOP}^{in} = \sum_{\substack{alleMBi \\ inGOP}} C_{MB}^{in}[i]$$

Hochgestellte Indizes "in" und "out" kennzeichnen hierbei den zu transcodierenden Eingangsbitstrom bzw. den transcodierten Ausgangsbitstrom Bitstrom. Der Index "i" kennzeichnet die einzelnen Makroblöcke. Des weiteren bedeuten:

C: Komplexität

$d_{MB}^{in}[i]$ : Datenmenge in Bit des i-ten Makroblocks im Ein- gangsbitstrom

$qs_{alt}[i]$: Quantisierungsfaktor des i-ten Makroblocks im Ein- gangs- bitstrom.

Die Regelung bestimmt für jeden Makroblock den Requantisierungsfaktor $qS_{neu}[i]$.
Weitere wichtige Größen sind:

Zieldatenmenge für einen transcodierten Makroblock     $td_{MB}[i]$
Zieldatenmenge für einen transcodierten Slice     $td_{Slice}$
Zieldatenmenge für ein transcodiertes Bild     $td_{Bild}$
Zieldatenmenge für eine transcodierte GOP     $td_{GOP}$

Die Zieldatenmenge ist hierbei die Datenmenge, die ein Makroblock, Slice, Bild, oder eine GOP nach Transcodierung mit dem von der Regelung festgelegten Requantisierungsfaktor im transcodierten Bitstrom besitzen soll.
Der einfacheren Schreibweise wegen wird für die weitere Erläuterung folgendes vereinbart:

Der Index "BO" (Bezugsobjekt) steht für Slice, Bild oder GOP, also BO $\ni$ {Slice, Bild, GOP}. Damit gilt als vereinbart, dass die nachfolgenden Gleichungen für verschiedene Bezugsobjekte BO gelten und dass die Regelung bezüglich verschiedener Bezugsobjekte BO realisiert werden kann. In den nachfolgenden gleichungen steht BO immer nur für dasselbe Bezugsobjekt, also Slice, Bild oder GOP.

Die Bitratenregelung benötigt Speicherplatz zur Voranalyse des zu transcodierenden Bitstroms. Daher besitzt die Regelung eine Verzögerungszeit. Bei der Voranalyse werden erfindungsgemäß die folgenden Größen im teilweise gespeicherten Eingangsbitstrom ermittelt:

$d_{MB}^{in}[i]$     Datenmenge in Bit dea i-ten Makroblocks im zu transco-dierenden Eingangsbitstrom

$d_{BO}^{In}$     Datenmenge in Bit eines Bezugsobjektes im zu transcodierenden Bitstrom

$qs_{MB}^{In}[i]$     Quantisierungsfaktor des i-ten Makroblocks im Ein- gangsbitstrom

Als weitere Eingangsgröße benötigt die Bitratenregelung die Bitrate $r^{in}$ des Eingangsbitstroms. Zur Ermittlung dieser Bitrate $r^{in}$ wird ein Abschnitt des Eingangsbitstroms gespeichert. Der Abschnitt erstreckt sich von einem Intra-Bild (inklusive dieses I-Bildes) bis zum darauffolgenden Intra-Bild (exklusive dieses I-Bildes). Die Bitrate $r^{in}$ wird also auf GOP-Basis ermittelt.

$$r^{in} = \frac{gesamte\_gespeicherte\_Datenmenge}{Gesamtzahl\_gespeicherter\_Bilder} \cdot Bildwiederholfrequenz$$

Ziel der Bitratenregelung ist, daß der transcodierte Ausgangsbitstrom eine konstante Bitrate $r^{out}$ (= Zielbitrate) aufweist, unabhängig davon, ob die Eingangsbitrate $r^{in}$ konstant oder variabel ist. Der Ablauf der Regelung ist dabei wie folgt:

1. Schritt:

Berechnung der Zieldatenmenge $td_{BO}$ je Bezugsobjekt gemäß

$$td_{BO} = \frac{r^{out}}{r^{in}} \cdot d_{BO}^{in} - \Delta d_{BO} ,$$

wobei $\Delta d_{BO}$ die Abweichung der tatsächlich erzeugten Datenmenge $d_{BO}^{in}$ in Bit beim vorhergehenden Bezugsobjekt von der Zieldatenmenge $td_{BO}$ ist, also

$$\Delta d_{BO} > 0, \text{ wenn } d_{BO}^{out} > td_{BO}$$

$$\Delta d_{BO} < 0, \text{ wenn } d_{BO}^{out} < td_{BO}$$

2. Schritt:

Berechnung eines Korrekturterms A für die Quantisierungsfaktoren im Bezugsobjekt BO:

$$A = \frac{C_{BO}^{in}}{td_{BO}}$$

wobei

$$C_{BO}^{in} = \sum_{\substack{alleMBi \\ imdMAkroblock}} C_{MB}^{in}[i]$$

3.Schritt:

Berechnung der Requantisierungsfaktoren $qs_{neu}$ für alle Makroblöcke gemäß

$$qs_{neu}[i] = S \cdot \left( (1-R)\frac{r^{in}}{r^{out}} qs_{alt}[i] + R \cdot A \right)$$

Hinter dem Faktor $r^{in}/r^{out}$ steckt die Annahme, dass die Komplexität eines Makroblockes bei der Requantisierung/Transcodierung gleich bleibt, also konstant ist. Dieser Faktor kann eventuell bei der Berechnung der Requantisierungsfaktoren weggelassen werden. Mit R ist ein Gewichtungsfaktor und mit S ein Faktor zur Vermeidung eines Über- oder Leerlaufs des VBV-Speichers bezeichnet. Die Regelung fügt bei einem drohenden Überlauf des VBV-Speichers sogenannte stuffing bytes in den Bitstrom ein. S ist Funktion in Abhängigkeit von dem Füllstand des VBV-Speichers. In einem Beispiel kann die Funktion für S linear sein. Die Funktion liefert dann bei kleinem Füllstand einen Wert S > 1,0 um $qs_{MH}^{in}$ [i] zu erhöhen. Bei großem Füllstand liefert die Funktion einen Wert S < 1,0, um $qs_{MB}^{out}$ [i]zu verkleinern. S wird nach der Transcodierung eines Bildes oder eines Makroblocks (wenn gegebenenfalls ein bestimmter Füllstand über- oder unterschritten wird) aktualisiert.

Damit ergibt sich eine Schaltungsanordnung zur Berechnung der Requantisierungsfaktoren $qs_{neu}$, wie diese in Fig. 10 angegeben ist. Einer zentralen Recheneinrichtung 67 werden die vorgegebenen Faktoren R, A und S sowie die Bitrate $r^{in}$ des empfangenen und damit eingangsseitigen Datenbitstromes und die gewünschte ausgangsseitige Bitrate $r^{out}$ zur Verfügung gestellt. Die Recheneinrichtung 67 bestimmt hieraus die neuen Requantisierungsfaktoren $qs_{neu}$. In der Stufe 65 wird A gemäß obiger Formel bestimmt. Die Stufe 65 steht ausgangsseitig mit der Recheneinrichtung 67 in Verbindung und erhält eingangsseitg aus der Stufe 62 den Parameter $C_{BO}^{in}$ und aus der Stufe 60 den Wert $td_{BO}$. Die Stufe 65 berechnet aus dem Quotienten von $C_{BO}^{in}$ / $td_{BO}$ den Wert für den Korrekturfaktor A.

Die Stufe 60 erzeugt gemäß obiger Berechnungsvorschrift aus den Größen $\Delta d_{BO}$, $d_{BO}^{in}$, $r^{in}$ und $r^{out}$ den Wert $td_{BO}$ und führt diese der Stufe 65 zu. Die Werte $dBO^{in}$ und $r^{in}$ werden von der Stufe 64 bereitgestellt. Des weiteren stellt die Stufe 64 den Wert $d_{MB}^{in}$[i] der Stufe 62 und den Wert $r^{in}$ der Recheneinrichtung 67 zur Verfügung. Die Stufe 62 erhält als Eingangsgröße auch die alten Requantisierungsfaktoren $qs_{alt}$[1] und führt der Stufe 65 den Wert $C_{so}^{in}$ zu. Schließlich gelangt der Korrekturfaktor S aus der Stufe 63 zur Recheneinrichtung 67.

Der Transcodierungsalgorithmus für den Transcodierer mit Bitratenregelung wurde gemäß den obigen Ausführungen entwickelt und untersucht. Die Funktionsfähigkeit des Algorithmus wird anhand eines Beispiels gezeigt. Die bekannte Bildtestsequenz mit dem Namen "Susie" (Anm.: diese Testsequenz zeigt eine Dame am Telefon) besitzt eine Auflösung von 720 x 576 Bildpunkten und eine Bildwiederholfrequenz von 25 Hz. Ein MPEG-2-Codierer wird so konfiguriert, daß er daraus einen Videobitstrom mit einer mittleren Bitrate von 6 Mbit/s erzeugt. Dieser Bitstrom wird an den Eingang des Erfindungsgemäßen Transcodierer gelegt und auf 3 Mbit/s transcodiert. Der transcodierte Bitstrom am Ausgang des Erfindungsgemäßen Transcodierer besitzt, wie gewünscht, eine konstante Bitrate. Die gewählten Bitraten sind typisch für die gegebene Problemstellung, können jedoch auch anders gewählt werden. Obwohl die DVD-Video eine maximale Bitrate von 9,8 Mbit/s zuläßt, beträgt die mittlere Bitrate der auf ihr gespeicherten VBR-Bitströme nur 6 Mbit/s oder darunter. Die Reduktion der Datenmenge im erfindungsgemäßen Transcodierer gelingt durch Requantisierung mit einem groben Quantisierungsfaktor.

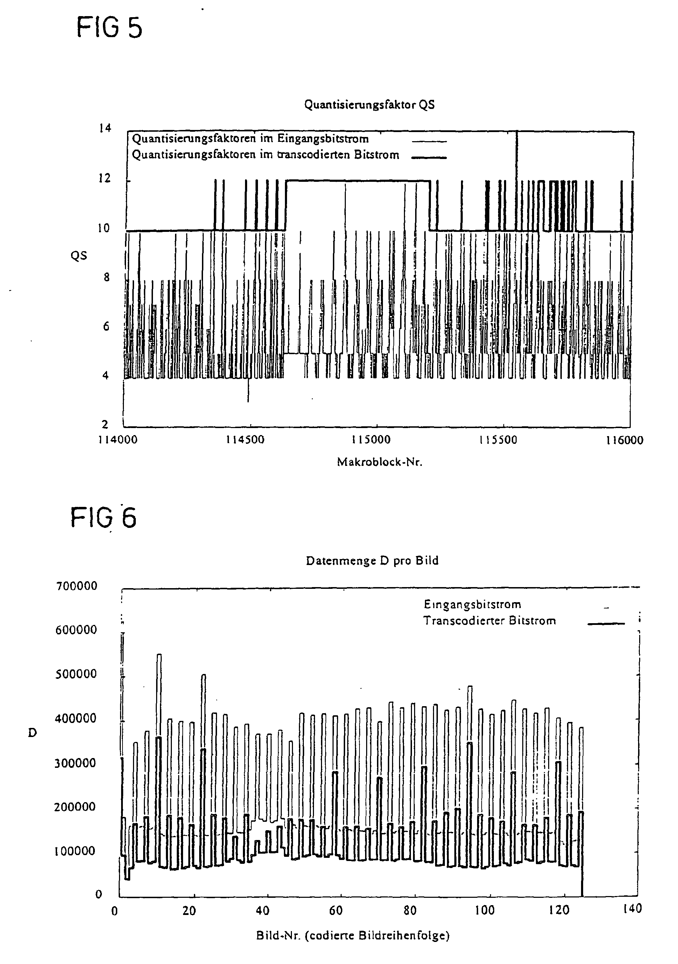

Fig.5 veranschaulicht den Requantisierungsvorgang. Mit QS ist auf der Senkrechten des Diagrammes der Quantisierungsfaktor QS im Eingangsbitstrom (schwach gezeichneter Kurvenverlauf) und im transcodierten Bitstrom (fett gezeichneter Kurvenverlauf) aufgetragen. Auf der waagrechten sind die fortlaufenden Makroblöcke dargestellt. Es ist deutlich erkennbar, daß durch den Requantisierungsvorgang die Quantisierungsfaktoren im transcodierten Bitstrom größer als im Eingangsbitstrom sind. Der Eingangsbitstrom enthält relativ kleine Quantisierungsfaktoren. Um die Bitrate des Eingangsbitstroms von 6 auf 3 Mbit/s zu reduzieren, werden im Requantisierungsvorgang die Quantisierungsfaktoren erhöht. Dies entspricht einer gröberen Quantisierung. Die Kurve, die die Quantisierungsfaktoren im transcodierten Bitstrom darstellt, verläuft daher oberhalb der Kurve, die die Quantisierungsfaktoren im Eingangsbitstrom wiedergibt. Die gröbere Quantisierung im transcodierten Bitstrom, und damit die kleinere Bitrate, spiegelt sich in der Datenmenge pro Bild wider.

Fig.6 zeigt, daß die einzelnen Bilder im transcodierten Bitstrom eine kleinere Datenmenge als im höherratigen Eingangsbitstrom besitzen. Der transcodierte Bitstrom besitzt aufgrund seiner kleineren Bitrate auch eine kleinere Datenmenge pro Bild, wie anhand der fett gezeichneten Kurve ersichtlich ist. Im dargestellten Diagramm ist die Datenmenge D pro Bild im Eingangsbitstrom und transcodierten Bitstrom aufgetragen.

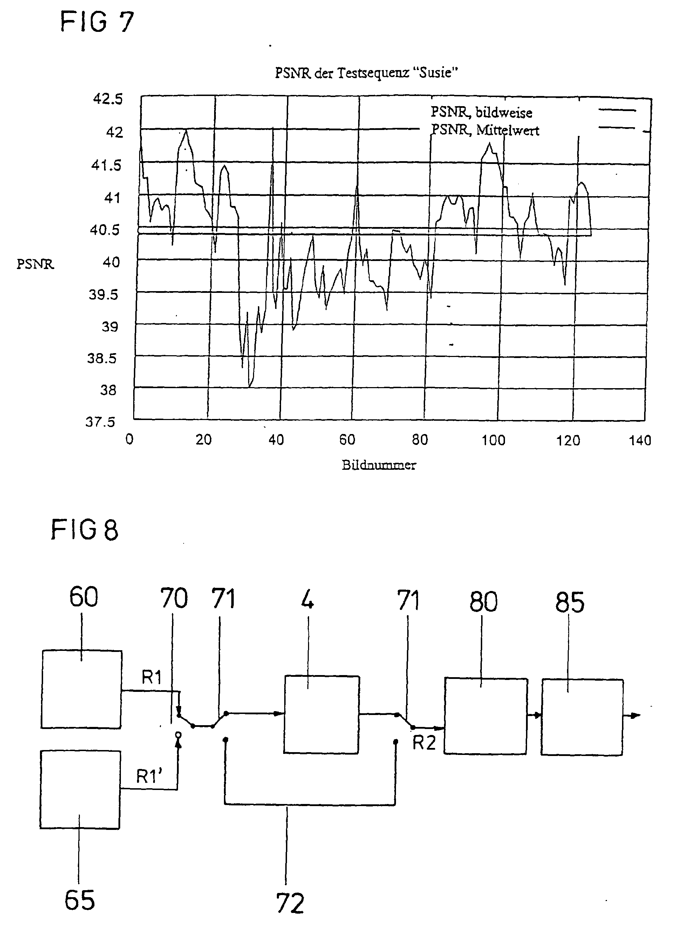

Um die Bildqualität des transcodierten Bitstroms beurteilen zu können, wird das sogenannte "Peak Signal-to-Noise Ratio" (PSNR) berechnet. Ein größeres PSNR steht in der Regel für eine bessere Bildqualität. Das PSNR des transcodierten Beispiel-Bitstroms ist in Fig.7 dargestellt. Dabei werden sowohl das PSNR für jedes Einzelbild als auch der Mittelwert über die gesamte Sequenz gezeigt. Der mit dem erfindungsgemäßen Transcodierer auf 3 Mbit/s transcodierte Bitstrom besitzt ein mittleres PSNR von 40,39 dB. Um diesen Wert beurteilen zu können, wird derselbe Eingangsbitstrom wie oben mit dem allgemeinen Transcodierer in Bild 2 auf 3 Mbit/s transcodiert und das PSNR berechnet. Der mit dem allgemeinen Transcodierer auf 3 Mbit/s transcodierte Bitstrom besitzt ein mittleres PSNR von 40,35 dB. Der erfindungsgemäße Transcodierer liefert somit ungefähr die gleiche Bildqualität wie der allgemeine Transcodierer.

Dieses Ergebnis ist sehr positiv, denn es besagt, daß der erfindungsgemäßen Transcodierer, trotz der geringeren Komplexität und den geringeren Speicheranforderungen nahezu die gleiche Leistungsfähigkeit wie der allgemeinen Transcodierer besitzt und, wie sich gezeigt hat, in manchen Fällen sogar besser ist. Der extrem hohe Realisierungsaufwand des Transcodierers von Fig. 2 kann somit vermieden werden. Die Ergebnisse des Beispiels sind repräsentativ und lassen sich anhand anderer Testsequenzen und Bitraten reproduzieren.

Die Anforderungen an den erfindungsgemäßen Transcodierer berücksichtigen die möglichst einfache Verwirklichung mit einem Video-Prozessor. Die vorhergehenden Erläuterungen haben gezeigt, daß der erfindungsgemäße Transcodierer nicht nur diese Anforderungen erfüllt, sondern auch eine Bildqualität liefert, die mit dem bekannten, sehr aufwendigen Transcodierer von Fig. 2 vergleichbar ist. Daher ist die Verwirklichung des erfindungsgemäßen Transcodierers durch einen Video-Prozessor mit geringem Speicheraufwand möglich und z.B. in einem optischen Bussystem innerhalb eines Kfz realiserbar.

Der Eingangsbitstrom wird stückweise in den Eingangspuffer 11 geschrieben. Die VLD-Einheit 12 zerlegt den Eingangsbitstrom R1 in seine Syntaxelemente und decodiert hierzu die Codewörter mit variabler Länge. Von den Syntaxelementen werden nur diejenigen weiterverarbeitet, die Koeffizientendaten kennzeichnen. Unter Koeffizientendaten werden die mit der diskreten Cosinus-Transformation (DCT) in den Frequenzbereich transformierten Bildpunkte aller Bilder verstanden. Die Koeffizientendaten werden dequantisiert (Q$^{-1}$) und anschließend dem Requantisierungsprozeß ($\overline{Q}$) unterzogen. Die Bitratenregelung regelt den Requantisierungsfaktor, so daß der transcodierte Bitstrom am Ausgang die gewünschte niedrige konstante Bitrate besitzt. Die requantisierten Koeffizientendaten werden in der VLC-Einheit 22 in Codewörter umgesetzt. Die VLC-Einheit 22 fügt ebenso die unveränderten Bewegungsdaten aus dem Eingangsbitstrom R1 in den transcodierten Bitstrom ein. Der vollständige transcodierte Bitstrom wird in dem Ausgangspuffer 23 gespeichert und ausgegeben.

Der erfindungsgemäße Transcodierer besitzt eine geringe Komplexität, da er im Vergleich zum allgemeinen Transcodierer in Bild 2 keine Transformationen (IDCT, DCT), keine Bewegungkompensation (MC) in einer Rückkopplungsschleife und keine Bewegungsschätzung (ME) durchführt. Da auf die Bewegungskompensation verzichtet wird, benötigt der erfindungsgemäßen Transcodierer keine Bildspeicher (FS). Die Speicheranforderungen sind somit gering. Die Bitratenregelung arbeitet mit geringer Verzögerungszeit. Damit erfüllt der erfindungsgemäße Transcodierer alle Anforderungen, die für eine vorteilhafte Verwirklichung mit einem Video-Prozessor nötig sind.

In Fig. 8 ist ein konkretes Anwendungsbeispiel für den digitalen Transcodierer im Blockschaltbild dargestellt. Der Transcodierer 4 wird in einem digitalen Videoaufzeichnungssystem zur Aufzeichnung von digitalen Daten auf einem Speichermedium 80 mit einem Datenbitstrom R2 konstanter Bitrate, die von der Bitrate des empfangenen Datenbitstroms R1 unabhängig ist, eingesetzt. Hierfür ist der Transcodierer 4 eingangsseitig an eine digitale Videoquelle, z. B. eine digitale Video-Disk 65 oder eine Signalquelle 60, an der ein digitales Video-Broad-Casting-Signal (DVBS, DVBC, DVBT) bereitgestellt wird, angeschlossen. Über einen Schalter 70 kann die entsprechende Signalquelle 60 oder 65 ausgewählt werden. Über eine Umschalteinrichtung 71 können die Signale der Signalquellen 60 bzw. 65 direkt über eine Verbindungsleitung 72 auf das Speichermedium 80 oder bitratenreduziert, wenn sich die Schalter der Umschalteinrichtung 71 in der in Figur 8 dargestellten Stellung befinden, gespeichert werden. In dieser Schalterstellung wird der empfangene Datenbitstrom R1 bzw. R1' über den Transcodierer 4 geführt und bitratenreduziert sowie eine konstante Bitrate aufweisend auf das Speichermedium 80 gespeichert. In der in Figur 8 dargestellten Schalterstellung kann eine "Longplay-Aufnahmefunktion" erreicht werden, da das Speichermedium 80 bitratenreduzierte Speicherdaten erhält. Die Aufnahmedauer bzw. Aufzeichnungsdauer des Speichermediums 80, das beispielsweise ein Magnetband oder ein Halbleiterspeicher sein kann, ist damit durch den erfindungsgemäßen Transcodierer 4 wesentlich erhöht.

Der wesentliche Vorteil des Einsatzes des Transcodierers 4 zur Aufzeichnung von Daten besteht darin, dass am Ausgang des Transcodierers 4 auf jeden Fall eine konstante Bitrate zur Verfügung steht, unabhängig davon, ob die eingangsseitigen Datenbitströme variabel oder konstant sind.

Ausgangsseitig kann man das Speichermedium 80 ein Decodierer 85, z. B. ein MPEG-2-Decodierer, angeschlossen sein. Darüber hinaus ist es auch möglich, den Transcodierer 4 so einzusetzen, dass er im Aufnahmemodus ein Transcodierungsprogramm und im Wiedergabemodus ein Decodierungsprogramm durchführt. Dies ist mikroprozessorgesteuert möglich.

**Patentansprüche**

**1.** Digitales Transcodiersystem zum Empfang von Datenbitströmen einer ersten Bitrate (R1) und Ausgeben eines Datenbitstromes einer im Vergleich zur ersten Bitrate (R1) unterschiedlichen und insbesondere reduzierten, zweiten Bitrate (R2), mit einer eingangsseitigen Decodiereinrichtung (10), welche einen Eingangspuffer (11) und einen nachgeschalteten VLD-Decodierer (12) aufweist, sowie mit einer ausgangsseitigen Codiereinrichtung (20), welche die Reihenschaltung eines Quantisierers (21) zur Requantisierung von in der Decodiereinrichtung (10) dequantisierten Daten mit einem Requantisierungsfaktor, einen nachgeschalteten VLC-Codierer (22) sowie einen Ausgangspuffer (23) aufweist, wobei zur Einstellung der zweiten Bitrate (R2) makroblockbezogen die dem VLC-Codierer (22) zuzuführenden, neuen DCT-Koeffizienten $QF_{neu}$ gemäß folgender Formel

$$QF_{neu}[v][u] = QF_{alt}[v][u] \cdot \frac{qs_{alt}}{qs_{neu}}$$

bestimmmt werden, wobei qs$_{alt}$ für alte und qs$_{neu}$ für neue Quantisierungsfaktoren und QF$_{alt}$ für die DCT-Koeffizienten am Ausgang des VLD-Decodierers (12) stehen,
**dadurch gekennzeichnet, daß** der Wert des Requantisierungsfaktors qs$_{neu}$ makroblockbezogen gemäß folgender Requantisierungsformel

$$qs_{neu}[i] = S \cdot ((1-R) \frac{r^{in}}{r^{out}} qs_{alt}[i] + R \cdot A)$$

ermittelt wird,
wobei S, A und R vorgegebene Korrekturfaktoren, r$^{in}$ die ermittelte Bitrate des empfangenen Datenbitstromes (R1) und r$^{out}$ die gewünschte Ausgangsbitrate (R2) des transcodierten Datenbitstromes sind, und, daß der Requantisierungsfaktor qs$_{neu}$ zusätzlich nach Maßgabe der Anzahl von vorhandenen Makroblöcken pro empfangenen Bild sowie der Bildwiederholfrequenz im empfangenen Datenbitstrom veränderbar ist.

2. Digitales Transcodiersystem nach Anspruch 1,
   **dadurch gekennzeichnet, daß** der Wert qs$_{neu}$ manuell oder durch einen Regelalgorithmus einstellbar ist.

3. Digitales Transcodiersystem nach Anspruch 1 oder 2,
   **dadurch gekennzeichnet, daß** eine gemeinsame Stufe (40) vorgesehen ist mit einem Multiplizierer (41), dem der Wert QF$_{alt}$ aus dem VLD-Decodierer (12) sowie der Quotient qs$_{alt}$/qs$_{neu}$ zugeführt wird, und daß der Ausgang des Multipliziers (41) über eine Float-/Integer-Stufe (42) mit dem Eingang des VLC-Codierers (22) in Verbindung steht.

4. Digitales Transcodiersystem nach einem der Ansprüche 1 bis 3,
   **dadurch gekennzeichnet, daß** der Wert qs$_{alt}$ aus dem eingangsseitigen Datenbitstrom (R1) bestimmt wird.

5. Digitales Transcodiersystem nach einem der Ansprüche 1 bis 5,
   **dadurch gekennzeichnet, daß** der VLC-Codierer (22) die unveränderten Bewegungsdaten aus dem eingangsseitigen Datenbitstrom (R1) in den transcodierten Bitstrom einfügt.

6. Digitales Transcodiersystem nach einem der Anspruch 1 bis 5,
   **dadurch gekennzeichnet, daß** eine Einrichtung (51) vorgesehen ist zur Ermittlung einer Zieldatenmenge (j) pro Bild oder pro Bezugsobjekt, und daß diese Einrichtung (51) mit einer Szenenschnitterkennungseinrichtung (55), welche Szenenschnitte im Bild detektiert, in Verbindung steht sowie als weitere Stellgrößen ein Mittelwert für die Requantisierungsfaktoren eines vorherigen Bildes des gleichen Bildtyps und ein Wert für die Anzahl der Bits, die bei der Transcodierung des unmittelbar vorherigen Bildes erzeugt wurden, zugeführt werden.

7. Digitales Transcodiersystem nach einem der Ansprüche 1 bis 6,
   **dadurch gekennzeichnet, daß** eine Überwachungseinrichtung (56) vorgesehen ist zur Überwachung eines Über- oder Unterlaufens eines VBV-Speichers (57).

8. Digitales Transcodiersystem nach einem der Ansprüche 1 bis 7,
   **dadurch gekennzeichnet, daß** die zweite Bitrate (R2) unabhängig von einer Variabilität der ersten Bitrate (R1) konstant eingestellt ist.

9. Verwendung eines digitales Transcodiersystem nach einem der Ansprüche 1 bis 8 in einem digitalen Videoaufzeichnungssystem zur Aufzeichnung von digitalen Daten auf einem Speichermedium (80) mit einem Datenbitstrom konstanter Bitrate (R2), die von der Bitrate des empfangenen Datenbitstromes (R1) unabhängig ist.

10. Verwendung nach Anspruch 9,
    **dadurch gekennzeichnet, daß** parallel zum Transcodiersystem mittels Schalteinrichtung (71) eine Durchgangsleitung (72) schaltbar ist, um den empfangenen Datenbitstrom (R1) unverändert auf das Speichermedium (80) aufzuzeichnen.

**11.** Verwendung nach Anspruch 9 oder 10,
**dadurch gekennzeichnet, daß** das Transcodiersystem (4) in einem Wiedergabemodus als Decodiersystem eingesetzt ist.

**12.** Verwendung nach einem der Ansprüche 9 bis 11,
**dadurch gekennzeichnet, daß** der empfangene Datenbitstrom (R1) ein Videobitstrom und insbesondere ein DVD-Videobitstrom nach dem MPEG-2-Videostandard ist.

### Claims

**1.** A digital transcoder system for receiving data bit streams at a first bit rate (R1) and emitting a data bit stream at a second bit rate (R2) which is different and, in particular, reduced in comparison to the first bit rate (R1), with a decoding device (10) on the input side, which includes an input buffer (11) and a subsequent VLD decoder (12) and with a coding device (20) on the output side, which includes the series connection of a quantiser (21) for requantising data dequantised in the decoding device (10) with a requantisation factor, a subsequent VLC coder (22) and an output buffer (23), wherein for the setting of the second bit rate (R2) the new DCT coefficients $QF_{new}$, which are to be supplied to the VLC coder (22), are determined in a macroblock related manner in accordance with the following formula:

$$QF_{new}[v][u] = QF_{old}[v][u] \cdot \frac{qs_{old}}{qs_{new}},$$

Wherein $qs_{old}$ represents old quantisation factors and $qs_{new}$ represents new quantisation factors and $QF_{old}$ represents the DCT coefficients at the output of the VLD decoder (12), **characterised in that** the value of the requantisation factor $qs_{new}$ is determined in a macroblock related manner in accordance with the following requantisation formulae

$$qs_{new}[i] = S \cdot \left( (1-R) \frac{r^{in}}{r^{out}} qs_{old}[i] + R \cdot A \right)$$

Wherein S, A and R are predetermined correction factors, $r^{in}$ is the determined bit rate of the data bit flow (R1) and $r^{out}$ is the desired output bit rate (R2) of the transcoded data bit flow and that the requantisation factor $qs_{new}$ is variable in accordance with the number of macroblocks present per image received and the image repetition frequency in the received data bit flow.

**2.** A digital transcoder system as claimed in claim 1, **characterised in that** the value $qs_{new}$ is settable manually or by a control algorithm.

**3.** A digital transcoder system as claimed in claim 1 or 2 **characterised in that** a common stage (40) is provided with a multiplier (41), to which the value $QF_{old}$ from the VLD decoder 12 and the quotient $qs_{old}/qs_{new}$ is supplied and that the output of the multiplier (41) is connected via a float-/integer stage (42) to the input of the VLC coder (22).

**4.** A digital transcoder system as claimed in claims 1 to 3, **characterised in that** the value $qs_{old}$ is determined from the data bit flow (R1) on the input side.

**5.** A digital transcoder system as claimed in claims 1 to 5, **characterised in that** the VLC coder (22) inserts the unaltered movement data from the data bit flow (R1) on the input side into the transcoded bit flow.

**6.** A digital transcoder system as claimed in one of claims 1 to 5, **characterised in that** a device (51) is provided for determining a target data quantity (j) per image or per reference object and that this device (51) is connected to a scene cut detection device (55) which detects scene cuts in the image, and, as further variables, a mean value for the requantisation factors of a previous image of the same image type and a value for the number of the bits, which were produced in the transcoding of the directly preceding image, are produced.

**7.** A digital transcoder system as claimed in one of claims 1 to 6, **characterised in that** a monitoring device is provided for monitoring an overflow or underflow of a VBV memory (57).

**8.** A digital transcoder system as claimed in one of claims 1 to 7, **characterised in that** the second bit rate (R2) is set to be constant independently of variability in the first bit rate (R1).

**9.** The use of a digital transcoder system as claimed in one of claims 1 to 8 in a digital video recording system for recording digital data on a storage medium (80) with a data bit stream of constant bit rate (R2) which is independent of the bit rate of the received data bit stream (R1).

**10.** The use as claimed in claim 9, **characterised in that** a through circuit is switchable parallel to the transcoder system by means of a switching device (71) in order to record the received data bit stream (R1) unaltered on the storage medium (80).

**11.** The use as claimed in claim 9 or 10, **characterised in that** the transcoder system (4) is used in a playback mode as a decoder system.

**12.** The use as claimed in one of claims 9 to 11, **characterised in that** the received bit stream (R1) is a video bit stream and particularly a DVD video bit stream in accordance with the MPEG-2 video standard.

**Revendications**

**1.** Système de transcodage numérique pour la réception de flux de bits de données d'un premier débit binaire (R1) et pour l'émission d'un flux de bits de données d'un deuxième débit binaire (R2) différent par rapport au premier débit binaire (R1), et en particulier réduit, muni d'un système de décodage (10) du côté entrée, qui comprend un tampon d'entrée (11) et un décodeur VLD (12) monté en aval, et muni d'un système de codage (20) du côté sortie, qui comprend le montage en série d'un quantificateur (21) pour la requantification des données déquantifiées dans le système de décodage (10) avec un facteur de requantification, un codeur VLC (22) monté en aval, et un tampon de sortie (23), dans lequel les nouveaux coefficients DCT $QF_{neu}$ devant être amenés au codeur VLC (22) selon la formule suivante :

$$QF_{neu}[v][u] = QF_{alt}[v][u] \cdot \frac{qs_{alt}}{qs_{neu}}$$

sont déterminés au niveau macrobloc pour le réglage du deuxième débit binaire (R2), $qs_{alt}$ représentant les anciens facteurs de quantification, $qs_{neu}$ les nouveaux, $QF_{alt}$ les coefficients DCT à la sortie du décodeur VLD (12), **caractérisé en ce que** la valeur du facteur de requantification $qs_{neu}$ est déterminée au niveau macrobloc selon la formule de requantification suivante :

$$qs_{neu}[i] = S \cdot ((1-R)\frac{r^{in}}{r^{out}} qs_{alt}[i] + R \cdot A)$$

S, A et R étant des facteurs de correction déterminés au préalable, $r^{in}$ étant le débit binaire déterminé (R1) du flux de bits de données reçu et $r^{out}$ étant le débit binaire de sortie voulu (R2) du flux de bits de données transcodées, et **en ce que** le facteur de requantification $qs_{neu}$ est en plus modulable en fonction du nombre de macroblocs existants par image reçue et en fonction du taux de rafraîchissement de l'image dans le flux de bits de données reçu.

2. Système de transcodage numérique selon la revendication 1, **caractérisé en ce que** la valeur $qs_{neu}$ peut être réglée manuellement ou par le biais d'un algorithme de réglage.

3. Système de transcodage numérique selon la revendication 1 ou 2, **caractérisé en ce qu'**une étape commune (40) est prévue avec un multiplicateur (41), auquel sont amenés la valeur $QF_{alt}$ provenant du décodeur VLD (12) et le quotient $qs_{alt}/qs_{neu}$ et **en ce que** la sortie du multiplicateur (41) est reliée à l'entrée du codeur VLC (22) par le biais d'un étage float/integer (flottant/entier) (42).

4. Système de transcodage numérique selon l'une des revendications 1 à 3, **caractérisé en ce que** la valeur $qs_{alt}$ est déterminée à partir du flux de bits de données côté entrée (R1).

5. Système de transcodage numérique selon l'une des revendications 1 à 5, **caractérisé en ce que** le codeur VLC (22) introduit les données de mouvement non modifiées provenant du flux de bits de données du côté entrée (R1) dans le flux de bits transcodé.

6. Système de transcodage numérique selon l'une des revendications 1 à 5, **caractérisé en ce qu'**un système (51) est prévu pour déterminer une quantité de données cibles (j) par image ou par objet de référence et **en ce que** ce système (51) est relié à un système de reconnaissance de plans (55), qui détecte des plans dans l'image, et **en ce qu'**une moyenne pour les facteurs de requantification d'une image précédente du même type d'image et une valeur pour le nombre de bits qui ont été produits lors du transcodage de l'image directement précédente, sont amenées comme autres grandeurs de réglage.

7. Système de transcodage numérique selon l'une des revendications 1 à 6, **caractérisé en ce qu'**un système de surveillance (56) est prévu pour la surveillance d'une saturation ou d'une sous-utilisation d'une mémoire VBV (57).

8. Système de transcodage numérique selon l'une des revendications 1 à 7, **caractérisé en ce que** le deuxième débit binaire (R2) est réglé indépendamment d'une variabilité du premier débit binaire (R1).

9. Utilisation d'un système de transcodage numérique selon l'une des revendications 1 à 8 dans un système d'enregistrement vidéo numérique pour l'enregistrement de données numériques sur un support de stockage (80) à un débit binaire constant (R2), qui est indépendant du débit binaire du flux de bits de données reçu (R1).

10. Utilisation selon la revendication 9, **caractérisé en ce que**, parallèlement au système de transcodage, une connexion (72) peut être mise en route au moyen d'un système de commutation (71) pour enregistrer le flux de bits de données reçu (R1) non modifié sur le support de stockage (80).

11. Utilisation selon la revendication 9 ou 10, **caractérisée en ce que** le système de transcodage (4) est utilisé en mode lecture en tant que système de décodage.

12. Utilisation selon l'une des revendications 9 à 11, **caractérisée en ce que** le flux de bits de données reçu (R1) est un flux de bits vidéo et en particulier un flux de bits vidéo DVD selon le standard vidéo MPEG-2.

## FIG 1

| DVD-Laufwerk (2) | → | Transcodierer (4) | → | Optischer Bus (6) | → | MPEG-2-Decodierer (8) |

**Linke Klammer (DVD-Laufwerk bis Transcodierer):**
- MPEG-2-Videobitstrom
- Videobitstrom besitzt eine Bitrate von bis zu 9,8 Mbit/s
- Konstante Bitrate (CBR)
- Variable Bitrate (VBR)

**Rechte Klammer (Transcodierer bis MPEG-2-Decodierer):**
- MPEG-2-Videobitstrom
- Videobitstrom besitzt eine niedrige Bitrate (z. B. 3 bis 4 Mbit/s)
- Konstante Bitrate (CBR)

EP 1 087 625 B1

## FIG 2

MPEG-2-Decodierer

MPEG-2-Codierer

Bitratenregelung

R1 → B → VLD → $Q^{-1}$ → IDCT → ⊕ → ⊕ → DCT → $\bar{Q}$ → VLC → B → R2

MC ← FS

$\bar{Q}^{-1}$

IDCT

⊕

MC ← FS

ME

EP 1 087 625 B1

FIG 3

EP 1 087 625 B1

FIG4

EP 1 087 625 B1

## FIG 5

Quantisierungsfaktor QS

Makroblock-Nr.

## FIG 6

Datenmenge D pro Bild

Bild-Nr. (codierte Bildreihenfolge)

## FIG 7

PSNR der Testsequenz "Susie"

PSNR, bildweise _____
PSNR, Mittelwert _____

PSNR

Bildnummer

## FIG 8

60  70  71  4  71  80  85

R1

R1'

R2

65  72

FIG 9

EP 1 087 625 B1

FIG 10

$$qs_{neu}[i] = S\left((1-R)\frac{r^{in}}{r^{out}}\, qs_{alt}[i] + R\cdot A\right)$$

$$A = \frac{c_{BO}^{in}}{td_{BO}}$$

EP 1 087 625 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5754235 A
- WO 9749206 A
- DE 19623934 A1

**In der Beschreibung aufgeführte Nicht-Patentliteratur**

- *IEEE Transactions on Consumer Electronics,* Februar 1998, vol. 44 (1), 88-98
- Artikel Transcoder Architectures For Video Coding. *IEEE International Conference On Imaging processing,* 1995, vol. 3, 408-411